# EUROPÄISCHE PATENTSCHRIFT

(11) **EP 0 985 854 B1**
(45) Veröffentlichungstag und Bekanntmachung des Hinweises auf die Patenterteilung: **04.06.2003**
(21) Anmeldenummer: 99116590.3
(22) Anmeldetag: 25.08.1999
(51) Int. Cl.: F16H 59/04, F16H 61/22

(54) **Handschaltung für das Wechselgetriebe eines Kraftfahrzeuges**
Gear lever for a gearbox of a vehicle
Levier de commande d'une boîte de vitesses d'un véhicule

(30) Priorität: 09.09.1998 DE 29816039 U
(43) Veröffentlichungstag der Anmeldung: 15.03.2000
(73) Patentinhaber: ZF Lemförder Metallwaren AG, 49448 Lemförde (DE)
(72) Erfinder: Burgstaler, Andree, 32351 Dielingen (DE)

(56) Entgegenhaltungen:
- DE-A- 2 700 976
- DE-A- 4 333 483
- DE-B- 1 165 433
- DE-C- 3 807 508
- US-A- 5 488 846

## Beschreibung

Die Erfindung beschreibt eine Handschaltung für das Wechselgetriebe eines Kraftfahrzeuges nach dem Oberbegriff des Patentanspruches 1.

Eine derartige Schaltvorrichtung ist aus der DE 11 65 433 B1 bekannt.

Eine Schaltvorrichtung ist aus der DE 38 07 508 C1 bekannt. Diese besteht aus einem Gehäuse, sowie einem Schalthebel, der um eine Gelenkkugel schwenkbar in einer Lagerschale aufgenommen und zum Anwählen und Schalten verschiedener Gänge in verschiedenen Schaltgassen bewegbar ist. An dem Schalthebel ist ein Feststellarm angebracht, welcher eine Fixierbohrung aufweist, die in einer Stellung des Schalthebels mit einer Fixierbohrung des Schalthebelgehäuses fluchtet. Bei der in dieser Schrift beschriebenen Lösung muß der Feststellarm zusätzlich an dem Schalthebel angeformt werden, was beispielsweise zu einem zusätzlichen Materialaufwand, mithin zu einer Erhöhung des Gewichtes und damit verbunden zu höheren Herstellungskosten führt.

Der Erfindung liegt die Aufgabe zugrunde, eine Handschaltung für das Wechselgetriebe eines Kraftfahrzeuges zu entwickeln, bei der eine einfache, schnell montierbare und demontierbare Transport- und Einstellsicherung zum Einsatz kommt, die zudem jederzeit verfügbar sein sollte.

Die Erfindung löst diese Aufgabe mit den kennzeichnenden Merkmalen des Patentanspruches 1.

Schaltungen werden verstärkt als Systeme produziert, geliefert und in das Kraftfahrzeug eingebaut. Diese kompletten Baugruppen müssen sich schnell und unkompliziert in das Fahrzeug einsetzen lassen. Eine derartige Forderung resultiert aus den immer kürzer werdenden Fertigungszyklen der modernen Automobilindustrie. Für den Transport einer Kraftfahrzeughandschaltung ist es einerseits vorteilhaft, den Schalthebel zu fixieren, um Beschädigungen der Schaltungssysteme und der Verpackung durch Eigenbewegungen des Schalthebels zu vermeiden. Für die Anpassung der Handschaltung an das Getriebe ist es andererseits nach dem Einbau derselben in das Kraftfahrzeug erforderlich, den Schalthebel beispielsweise in seiner Neutralstellung festzusetzen. Erst danach erfolgt die Verbindung und Justierung der Übertragungselemente mit dem Kraftfahrzeuggetriebe. Übertragungselemente können Gestänge oder Seilzüge sein. Nach der Anbringung der Übertragungselemente am Getriebe wird die Schalthebelarretierung wieder gelöst. Die Schaltung ist nun in der vorgeschriebenen Lage justiert und sofort einsatzbereit.

Bei der vorgestellten Lösung besteht die Handschaltung aus einem einteiligen Gehäuse. Dieses wird vorzugsweise aus Kunststoff gefertigt. Das Gehäuse dient der beweglichen Lagerung eines Schalthebels, der um eine Gelenkkugel schwenkbar in einer in dem Gehäuse eingesetzten Lagerschale aufgenommen ist.
In wenigstens einer Stellung des Schalthebels greift eine Transport- und Einstellsicherung durch mindestens eine Fixierbohrung des Gehäuses hindurch in wenigstens eine weitere, in die Gelenkkugel eingebrachte, mit der Fixierbohrung im Gehäuse fluchtende Fixierbohrung ein.

Der Vorteil einer erfindungsgemäßen Handschaltvorrichtung besteht insbesondere darin, daß die Transport- und Einstellsicherung unmittelbar an der Gelenkkugel zum Eingriff kommt, sodaß zusätzliche Anbauten am Schalthebel oder am Gehäuse entfallen können. Es wurde damit eine einfache, schnell montierbare und demontierbare Transport- und Einstellsicherung geschaffen, die zudem kostengünstig herstellbar und jederzeit verfügbar ist, weil sie für eventuell erforderlich werdende Wartungsarbeiten an der Handschaltung verbleibt.
Weitere Ausgestaltungen der Erfindung sind Gegenstand der Unteransprüche.

So kann bei einer erfindungsgemäßen Handschaltung für das Wechselgetriebe eines Kraftfahrzeuges die Transport- und Einstellsicherung formschlüssig in die gehäuseseitige Fixierbohrung sowie form- und kraftschlüssig in die Fixierbohrung innerhalb der Gelenkkugel eingreifen. Dies bedeutet, daß eine gewisse Beweglichkeit der Transport- und Einstellsicherung innerhalb der gehäuseseitigen Fixierbohrung gewährleistet sein sollte, um die Einführungsbewegung zu erleichtern und zudem das Einrasten in die nachfolgend noch zu beschreibende Schnappverbindung zu ermöglichen. In der Fixierbohrung innerhalb der Gelenkkugel ist hingegen jegliches Spiel der Transport- und Einstellsicherung zu vermeiden, da dies Ungenauigkeiten bei der Einstellung beziehungsweise Abstimmung der Schaltvorrichtung auf das Wechselgetriebe des Kraftfahrzeuges bewirken würde. Aus diesem Grund wird auch vorgeschlagen, die Transport-und Einstellsicherung unter Vorspannung in die Fixierbohrung eingreifen zu lassen.

Eine weitere Ausgestaltung einer erfindungsgemäßen Handschaltung besteht ferner darin, daß die Transport- und Einstellsicherung annähernd eine U-, V-, W- X-, oder Y-Form aufweisen kann. Insbesondere ist es von Vorteil, wenn die Transport- und Einstellsicherung über zwei Schenkel verfügt. Dadurch wird in einfacher Weise eine Bewegung des Schalthebels um die Wählachse verhindert, was bei einer stiftförmigen Transport- und Einstellsicherung nicht in jedem Fall gewährleistet wäre.
Als besonders vorteilhaft hat sich insbesondere eine annähernd U-förmige Transport- und Einstellsicherung erwiesen. Es versteht sich von selbst, daß bei einer derartigen Ausführung einer erfindungsgemäßen Transport- und Einstellsicherung jeweils zwei Fixierbohrungen vorzusehen sind, in die die Schenkel der beispielsweise U-förmigen Transport- und Einstellsicherung eingreifen.

Um die Transport- und Einstellsicherung bei einer erfindungsgemäßen Handschaltung für das Wechselgetriebe eines Kraftfahrzeuges jederzeit verfügbar zu haben, wird darüber hinaus vorgeschlagen, an dem Gehäuse der Handschaltung eine Schnappverbindung anzuformen, in die die Transport- und Einstellsicherung in wenigstens zwei Stellungen einrastet.
Diese Schnappverbindung kann dabei drei Schnappnasen aufweisen, zwischen denen zwei Eingriffstellungen der Transport- und Einstellsicherung definiert sind. In einer der Eingriffsstellungen ist der Schalthebel fixiert, in der anderen ist er frei beweglich, das heißt, die Transport- und Einstellsicherung greift nicht in die Fixierbohrung der Gelenkkugel ein. Bei Reparatur- und Wartungsarbeiten am Kraftfahrzeuggetriebe steht die Transport- und Einstellsicherung somit dem Monteur sofort zur Verfügung.

Selbstverständlich können die vorstehend genannten und die nachfolgend noch zu erläuternden Merkmale der Erfindung nicht nur in der jeweils angegebenen Kombination, sondern auch in anderen Kombinationen oder in Alleinstellung verwendet werden, ohne dabei den Rahmen der Erfindung zu verlassen.

Ein Ausführungsbeispiel der Erfindung wird nachstehend unter Bezugnahme auf die Zeichnungen näher erläutert. Es zeigen:
- **Figur 1:**: eine ausschnittsweise Darstellung einer erfindungsgemäßen Handschaltung in dreidimensionaler Ansicht,
- **Figur 2:**: eine ausschnittsweise Schnittdarstellung einer erfindungsgemäßen Handschaltung und
- **Figur 3:**: eine Darstellung einer erfindungsgemäßen Transport- und Einstellsicherung.

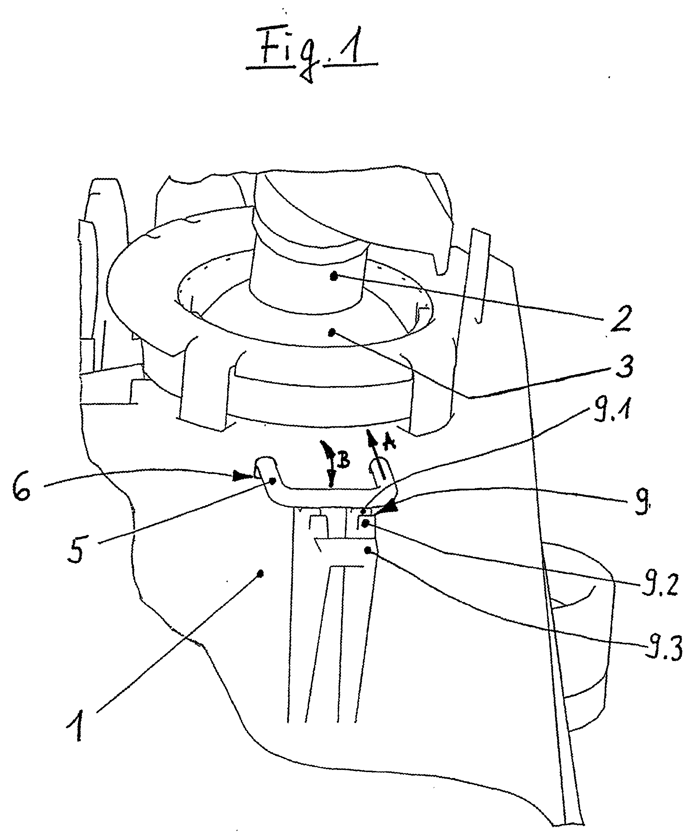

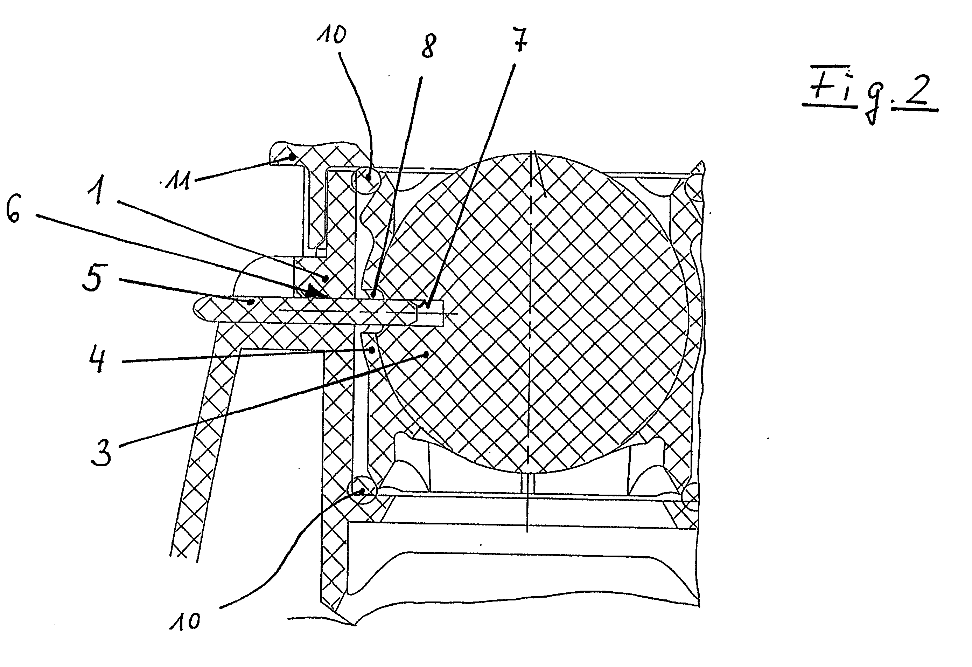

Aus den Figuren 1 und 2 geht eine bevorzugte Ausführung einer erfindungsgemäßen Handschaltung hervor, bei der ein Schalthebel 2 um eine Gelenkkugel 3 schwenkbar in einer Lagerschale 4 aufgenommen ist. Diese Lagerschale 4 wird ihrerseits in ein einteiliges Gehäuse 1 aus Kunststoff eingesetzt. Die Lagerschale ist durch ein Verschlußelement 11 in dem Gehäuse festgelegt. Ein innenseitig in das Verschlußelement eingefügter Gummiring 12 verhindert unerwünschte Bewegungen der Bauteile und bewirkt gleichzeitig einen Toleranzausgleich. Der in der Figur 2 nicht gezeigte Schalthebel 2 ist mit der Gelenkkugel 3 einstückig ausgeführt und besteht ebenfalls aus Kunststoff.
Eine Transport- und Einstellsicherung 5 besteht bei der dargestellten Ausführung aus einem U-Förmigen Kunststoffbügel. Die Schenkel 5.1 und 5.2 der Transport- und Einstellsicherung 5 durchsetzen Fixierbohrungen 6 des Gehäuses 1 sowie Fixierbohrungen 8 der Lagerschale und greifen in mit den Fixierbohrungen 6 fluchtende Fixierbohrungen 7, die in die Gelenkkugel 3 eingebracht sind, ein.

Die Transport- und Einstellsicherung 5 ist axial in Pfeilrichtung A bewegbar, wie dies aus der Figur 1 hervorgeht. Die Fixierbohrung 6 im Gehäuse 1 ist bei der dargestellten Ausführung als Langloch gestaltet, sodaß die Transport- und Einstellsicherung 5 nach der Freigabe der Fixierbohrung 7 in Richtung des Pfeiles B bewegt werden kann. Dadurch ist es möglich, die Transport- und Einstellsicherung 5 in eine an dem Gehäuse 1 angeformte Schnappverbindung 9 einzurasten, wo sie bis zur nächstnötigen Verwendung verbleibt. Die Schnappverbindung 9 weist drei Schnappnasen 9.1, 9.2 und 9.3 auf, zwischen denen demnach zwei Eingriffstellungen der Transport- und Einstellsicherung 5 definiert sind.

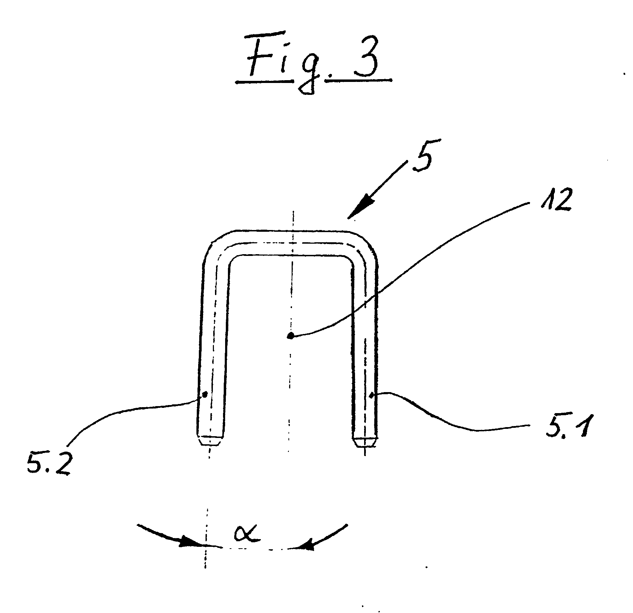

In der Figur 3 ist darüber hinaus eine mögliche Ausführung einer Transport- und Einstellsicherung 5 dargestellt. Die Schenkel 5.1 und 5.2 weisen dabei einen unterschiedlichen Abstand zu der gedachten Mittellinie 12 auf, woraus resultiert, daß eine derartige Transport- und Einstellsicherung 5 nur unter einer Vorspannung in die Fixierbohrungen 7 einschiebbar ist. Der Schenkel 5.1 wird dabei achsparallel zu der Mittellinie 12 ausgeführt, während der Schenkel 5.2 einen Winkel α mit der Mittellinie 12 einschließt.

### Bezeichnungsliste:

- 1: Gehäuse
- 2: Schalthebel
- 3: Gelenkkugel
- 4: Lagerschale
- 5: Transport- und Einstellsicherung
- 5.1: erster Schenkel
- 5.2: zweiter Schenkel
- 6: Fixierbohrung
- 7: Fixierbohrung
- 8: Fixierbohrung
- 9: Schnappverbindung
- 9.1: Schnappnase
- 9.2: Schnappnase
- 9.3: Schnappnase
- 10: Gummiring
- 11 1: Verschlußelement
- 12: Mittellinie
- α: Winkel

## Patentansprüche

1. Handschaltung für das Wechselgetriebe eines Kraftfahrzeuges bestehend aus einem einteiligen Gehäuse (1) sowie einem Schalthebel (2), der um eine Gelenkkugel (3) schwenkbar in einer in dem Gehäuse eingesetzten Lagerschale (4) aufgenommen ist, wobei in wenigstens einer Stellung des Schalthebels (2) eine Transport- und Einstellsicherung (5) durch das Gehäuses (1) hindurchgreift, **dadurch gekennzeichnet, daß**
die Transport- und Einstellsicherung (5) wenigstens zwei Schenkel (5.1, 5.2) aufweist, die durch wenigstens zwei Fixierbohrungen (6) des Gehäuses (1) hindurch in wenigstens zwei weitere, in die Gelenkkugel (3) eingebrachte und mit den Fixierbohrungen (6) des Gehäuses (1) fluchtende Fixierbohrungen (7) eingreifen.

2. Handschaltung für das Wechselgetriebe eines Kraftfahrzeuges nach Anspruch 1, **dadurch gekennzeichnet, daß** die Transport- und Einstellsicherung (3) formschlüssig in die Fixierbohrungen (6) des Gehäuses (1) sowie form- und kraftschlüssig in die Fixierbohrungen (7) der Gelenkkugel (3) eingreift.

3. Handschaltung für das Wechselgetriebe eines Kraftfahrzeuges nach Anspruch 1 oder 2, **dadurch gekennzeichnet, daß** die Transport-und Einstellsicherung (5) unter Vorspannung in die Fixierbohrungen (7) der Gelenkkugel (3) eingreift.

4. Handschaltung für das Wechselgetriebe eines Kraftfahrzeuges nach einem der vorhergehenden Ansprüche, **dadurch gekennzeichnet, daß** die Transport- und Einstellsicherung (5) annähernd eine U-, V-, W- X-, oder Y-Form aufweist.

5. Handschaltung für das Wechselgetriebe eines Kraftfahrzeuges nach einem der Ansprüche 1 bis 4, **dadurch gekennzeichnet, daß** an dem Gehäuse (1) eine Schnappverbindung (9) angeformt ist, in die die Transport- und Einstellsicherung (5) in wenigstens zwei Stellungen einrastet.

6. Handschaltung für das Wechselgetriebe eines Kraftfahrzeuges nach Anspruch 5, **dadurch gekennzeichnet, daß** die Schnappverbindung (9) drei Schnappnasen (9.1, 9.2 und 9.3) aufweist, zwischen denen zwei Eingriffstellungen der Transport- und Einstellsicherung (5) definiert sind.

## Claims

1. Manual gearshifting device for the variable-speed transmission of a motor vehicle comprising a one-piece housing (1) as well as a gearshift lever (2), which is accommodated pivotally about a joint ball (3) in a bearing shell (4) fitted in the housing, wherein in at least one position of the gearshift lever (2) a transport and adjustment locking device (5) engages through the housing (1), **characterized in that** the transport and adjustment locking device (5) has at least two limbs (5.1, 5.2), which engage through at least two fixing bores (6) of the housing (1) into at least two further fixing bores (7), which are introduced into the joint ball (3) and aligned with the fixing bores (6) of the housing (1).

2. Manual gearshifting device for the variable-speed transmission of a motor vehicle according to claim 1, **characterized in that** the transport and adjustment locking device (3) engages positively into the fixing bores (6) of the housing (1) as well as positively and non-positively into the fixing bores (7) of the joint ball (3).

3. Manual gearshifting device for the variable-speed transmission of a motor vehicle according to claim 1 or 2, **characterized in that** the transport and adjustment locking device (5) engages under initial tension into the fixing bores (7) of the joint ball (3).

4. Manual gearshifting device for the variable-speed transmission of a motor vehicle according to one of the preceding claims, **characterized in that** the transport and adjustment locking device (5) is approximately U-, V-, W-, X- or Y-shaped.

5. Manual gearshifting device for the variable-speed transmission of a motor vehicle according to one of claims 1 to 4, **characterized in that** formed on the housing (1) is a snap connection (9), into which the transport and adjustment locking device (5) latches in at least two positions.

6. Manual gearshifting device for the variable-speed transmission of a motor vehicle according to claim 5, **characterized in that** the snap connection (9) comprises three snap lugs (9.1, 9.2, 9.3), between which two engagement positions of the transport and adjustment locking device (5) are defined.

## Revendications

1. Commande manuelle pour la boîte de vitesses d'un véhicule automobile, constituée d'un boîtier (1) d'un seul tenant ainsi que d'un levier (2) de changement de vitesse, qui est reçu à pivotement autour d'une rotule d'articulation (3) dans un coussinet de palier (4) installé dans le boîtier, un blocage (5) de transport et de réglage traversant le boîtier (1) dans au moins une position du levier (2) de changement de vitesse,
**caractérisée en ce que** le blocage (5) de transport et de réglage présente au moins deux branches (5.1, 5.2) qui, en traversant au moins deux perçages d'immobilisation (6) du boîtier (1), s'engagent dans au moins deux autres perçages d'immobilisation (7) pratiqués dans la rotule d'articulation (3) et alignés avec les perçages d'immobilisation (6) du boîtier (1).

2. Commande manuelle pour la boîte de vitesses d'un véhicule automobile selon la revendication 1, **caractérisée en ce que** le blocage (5) de transport et de réglage s'engage par complémentarité de formes dans les perçages d'immobilisation (6) du boîtier (1), et par complémentarité de formes ainsi qu'à force dans les perçages d'immobilisation (7) de la rotule d'articulation (3).

3. Commande manuelle pour la boîte de vitesses d'un véhicule automobile selon la revendication 1 ou 2, **caractérisée en ce que** le blocage (5) de transport et de réglage s'engage sous précontrainte dans les perçages d'immobilisation (7) de la rotule d'articulation (3).

4. Commande manuelle pour la boîte de vitesses d'un véhicule automobile selon l'une quelconque des revendications précédentes, **caractérisée en ce que** le blocage (5) de transport et de réglage présente approximativement une forme de U, de V, de W, de X ou de Y.

5. Commande manuelle pour la boîte de vitesses d'un véhicule automobile selon l'une quelconque des revendications 1 à 4, **caractérisée en ce qu'**un assemblage à enclenchement (9), dans lequel le blocage (5) de transport et de réglage s'enclenche dans au moins deux positions, est formé sur le boîtier (1).

6. Commande manuelle pour la boîte de vitesses d'un véhicule automobile selon la revendication 5, **caractérisée en ce que** l'assemblage à enclenchement (9) présente trois ergots d'enclenchement (9.1, 9.2 et 9.3), entre lesquels sont définies deux positions d'engagement du blocage (5) de transport et de réglage.
